(19) Europäisches Patentamt
European Patent Office
Office européen des brevets

(11) EP 4 786 038 A1

(12) EUROPEAN PATENT APPLICATION
published in accordance with Art. 153(4) EPC

(43) Date of publication:
05.08.2026 Bulletin 2026/32

(51) International Patent Classification (IPC):
B01D 71/02 (2006.01)   B01D 69/00 (2006.01)
B01D 69/08 (2006.01)   B01D 69/10 (2006.01)
B01D 69/12 (2006.01)   C01B 32/05 (2017.01)

(21) Application number: 24871858.7

(52) Cooperative Patent Classification (CPC):
B01D 69/00; B01D 69/08; B01D 69/10;
B01D 69/12; B01D 71/02; C01B 32/05

(22) Date of filing: 11.09.2024

(86) International application number:
PCT/JP2024/032524

(87) International publication number:
WO 2025/070061 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023 JP 2023167599

(71) Applicant: Toray Industries, Inc.
Tokyo 103-8666 (JP)

(72) Inventors:
• YAHAGI, Nahoko
  Otsu-shi, Shiga 520-8558 (JP)
• TANIMURA, Yasuaki
  Otsu-shi, Shiga 520-8558 (JP)
• AOSHIMA, Kenta
  Otsu-shi, Shiga 520-8558 (JP)

(74) Representative: Kador & Partner Part mbB
Corneliusstraße 15
80469 München (DE)

(54) **FLUID SEPARATION MEMBRANE AND FLUID SEPARATION MEMBRANE MODULE**

(57)     The present invention relates to a fluid separation membrane that includes a separation functional layer, wherein the separation functional layer has a carbon element ratio of 40 atom% or more and 98 atom% or less, and the separation functional layer has voids therein having an average pore diameter of 3 nm or more and 150 nm or less , and thus it is possible to provide a highly durable fluid separation membrane having high separation performance and improved brittleness.

【Fig.1】

**Description**

TECHNICAL FIELD

The present invention relates to a fluid separation membrane and a fluid separation membrane module.

BACKGROUND ART

Separation of specific components from various mixed gases and mixed liquids has been conventionally performed by a cryogenic separation method, an adsorption separation method (PSA), and a chemical/physical absorption method. However, since these techniques require a cryogenic state and a regeneration operation, a large amount of energy is required for separation. On the other hand, the membrane separation method has advantages such as low energy consumption and downsizing of a device.

As a material of the separation membrane, for example, organic polymer membranes and inorganic membranes such as zeolite membranes, silica membranes, and carbon membranes have been proposed. Among them, carbon membranes exhibit excellent separation performance and are usable even in environments where heat resistance and chemical resistance are required and organic membranes cannot be applied. Therefore, carbon membranes are expected to be put to practical use. Common carbon membranes have pores of different sizes, called ultramicropores (< 0.7 nm) and micropores (0.7 nm to 2.0 nm) (M. Rungta, et al., Carbon, 115 (2017), pp. 237-248). Ultramicropores mainly contribute to separation selectivity, and micropores enhance transport characteristics in the membrane, so that excellent separation performance can be exhibited while achieving both permeance and separation factor.

Separation membranes using a carbon membrane as a separation functional layer are roughly classified into two types: a self-supporting carbon membrane that does not use a porous support, and a tubular or monolithic composite carbon membrane in which a carbon membrane is formed on a surface of a porous support. As the composite carbon membrane, for example, proposed are: a porous ceramic composite hollow fiber membrane that is obtained by supporting a carbon thin film on the surface of a porous ceramic hollow fiber membrane (for example, refer to Patent Document 1); and a carbon membrane for fluid separation use that has a core layer having a bicontinuous porous structure, and a skin layer formed around the core layer and having substantially no bicontinuous porous structure (for example, refer to Patent Document 2).

PRIOR ART DOCUMENTS

PATENT DOCUMENTS

Patent Document 1: Japanese Patent Laid-open Publication No. 08-299769
Patent Document 2: PCT International Publication No. 2016/13676

SUMMARY OF THE INVENTION

PROBLEMS TO BE SOLVED BY THE INVENTION

In a purification unit for a gas or the like using a separation membrane, since the permeance is improved as the partial pressure difference through the separation membrane increases, separation and purification under high pressure conditions are often desired from the viewpoint of energy efficiency, and a separation membrane that can withstand high pressure is required. For example, in a natural gas purification plant, in order to separate and remove carbon dioxide as an impurity from methane gas as a main component, application of a membrane separation method utilizing a high supply pressure of several MPa or more has been studied. In the chemical industry, a membrane separation method has started to be used in a step of separating and purifying water contained as an impurity in alcohol or acetic acid, and it is necessary to provide a large differential pressure between the upstream side and the downstream side of the separation membrane for efficient separation and purification.

However, the conventional fluid separation membrane described in Patent Document 1 or 2 has a problem that defects and breakage are likely to occur in the separation membrane due to the influence of vibration during use, stress generated by a dimensional change due to fluctuations in pressure and temperature, and the like. In addition, defects and breakage of the separation membrane may occur when processing or assembling is performed in the manufacturing process of the separation membrane module, and these problems are remarkable in a carbon membrane having high brittleness. When defects or breakage occur in the separation membrane, the separation target fluid leaks to the downstream side of the separation membrane, and the separation selectivity is lowered, so that high durability of the separation membrane is required.

Therefore, an object of the present invention is to provide a highly durable fluid separation membrane having high separation performance and improved brittleness.

SOLUTIONS TO THE PROBLEMS

The present invention adopts the following constitution to solve the problem described above.

A fluid separation membrane comprising a separation functional layer, wherein the separation functional layer has a carbon element ratio of 40 atom% or more and 98 atom% or less, and the separation functional layer has voids therein having an average pore diameter of 3 nm or more and 150 nm or less.

EFFECTS OF THE INVENTION

According to the present invention, it is possible to provide a highly durable fluid separation membrane having high separation performance and improved brittleness. Since the separation functional layer in the fluid separation membrane of the present invention has a plurality of voids having an average pore diameter of 3 nm or more and 150 nm or less, the diffusibility of the fluid is enhanced, and a fluid separation membrane having higher permeability than that of a conventionally known carbon membrane is obtained. Furthermore, the dispersion of voids in the separation functional layer increases toughness and suppresses the development of defects such as cracks, and as a result, a fluid separation membrane having excellent durability is obtained.

BRIEF DESCRIPTION OF THE DRAWINGS

Fig. 1 is a scanning transmission electron micrograph of a cross section of a fluid separation membrane of Example 1.
Fig. 2 is a scanning transmission electron micrograph of a separation functional layer in the fluid separation membrane of Example 1.

EMBODIMENTS OF THE INVENTION

The present invention relates to a fluid separation membrane including a separation functional layer, wherein the separation functional layer has a carbon element ratio of 40 atom% or more and 98 atom% or less, and the separation functional layer has voids therein having an average pore diameter of 3 nm or more and 150 nm or less.

<Fluid Separation Membrane>

The fluid separation membrane of the present invention is a fluid separation membrane having a separation functional layer. The fluid separation membrane is capable of selectively permeating a specific component, and has a separation functional layer having a separation function. The fluid separation membrane in the present invention may be a self-supporting membrane having no porous support layer or a composite membrane having a porous support layer. In the case of a composite membrane having a porous support layer, that is, a fluid separation membrane in which a separation functional layer is formed on at least a part of the porous support layer, the separation functional layer can be thinned while securing mechanical strength, so that the permeability of a fluid separation membrane is increased, which is preferable.

When the fluid separation membrane of the present invention is a composite membrane having a porous support layer, the porous support layer is not particularly limited as long as it is a material that is porous, does not hinder fluid permeation, and has a through-pore, and conventionally known materials can be appropriately selected. Examples of a material suitable as the porous support layer include a material having a through-pore derived from a phase separation structure, a material having a structure in which a plurality of particles are connected, a material such as a woven fabric or a nonwoven fabric in which fibrous materials are folded and appropriately bonded as necessary, and a material having a bicontinuous porous structure in which voids and a substance constituting a support are continuous with each other. These materials are preferably appropriately selected from the viewpoint of exhibiting a function of supporting the separation functional layer without hindering the permeation of the fluid. Among them, a material having a bicontinuous porous structure is more preferable because voids and a substance constituting the porous support layer are continuous with each other, and the curvature of the interface thereof is lower than that of the porous support layer in which particles are connected, so that the permeation of the fluid is not hindered, and the stress dispersing effect of the substance constituting the porous support layer is high, and as a result, the compressive strength is increased.

The material of the porous support layer is not particularly limited, and conventionally known materials can be appropriately selected. Examples of the material include porous inorganic materials such as alumina, silica, cordierite, zirconia, titania, vycor glass, zeolite, magnesia, and sintered metals; porous organic materials containing at least one polymer selected from the group consisting of homopolymers and copolymers such as polysulfone, polyether sulfone, polyamide, polyester, cellulose-based polymer, vinyl polymer, polyphenylene sulfide, polyphenylene sulfide sulfone, polyphenylene sulfone, and polyphenylene oxide; and porous carbon materials obtained by carbonizing a porous organic material made of a carbonizable resin. As the carbonizable resin, a thermoplastic resin or a thermosetting resin can be used. Examples of the thermoplastic resin include polyphenylene ether, polyvinyl alcohol, polyacrylonitrile, phenol resins, aromatic polyesters, polyamic acids, aromatic polyimides, aromatic polyamides, polysiloxane, polyvinylidene fluoride, cellulose acetate, polyetherimide, and copolymers of these resins. Examples of the thermosetting resin include unsaturated polyester resins, alkyd resins, melamine resins, urea resins, polyimide resins, diallyl phthalate resins, lignin resins, urethane resins, phenol resins, polyfurfuryl alcohol resins, and copolymers of these resins. These resins may be used alone, or a plurality of the resins may be used. From the viewpoint of cost and productivity, polyacrylonitrile or an aromatic polyimide is particularly preferably used.

The material constituting the porous support layer is preferably a porous inorganic material or a porous carbon material from the viewpoint of heat resistance, chemical resistance, and mechanical strength. The porous carbon material is more preferably a porous carbon material obtained by carbonizing a porous organic material made of a carbonizable resin from the viewpoint of easily controlling the carbon element ratio of the porous support layer which will be described later. When the main constituent elements constituting the separation functional layer and the porous support layer are the same, since the chemical properties of the separation functional layer and the porous support layer are similar to each other, interfacial adhesion is excellent, which is preferable.

The constituent elements of the porous support layer are not particularly limited, but the carbon element ratio of the porous support layer is preferably 60 atom% or more and 98 atom% or less. The porous support layer more preferably has a carbon element ratio of 70 atom% or more because the amount of functional groups contained in the porous support layer decreases, chemical resistance is improved, and strength can be maintained for a long period of time as the carbon element ratio of the porous support layer increases. On the other hand, the porous support layer more preferably has a carbon element ratio of 95 atom% or less because the brittleness decreases and the resistance to breakage increases as the carbon element ratio of the porous support layer decreases. The carbon element ratio of the porous support layer in the present invention means the percentage of carbon atoms when the total number of atoms of all elements calculated by wide scan analysis using X-ray photoelectron spectroscopy is 100 atom%. In the X-ray photoelectron spectroscopic measurement, the fluid separation membrane is cleaved, surface contamination is removed by argon gas cluster ion etching or the like, and then the measurement range is adjusted to be only the porous support layer, and the observation surface is analyzed.

<Separation Functional Layer>

The separation functional layer in the fluid separation membrane of the present invention is a layer having a carbon element ratio of 40 atom% or more and 98 atom% or less and voids having an average pore diameter of 3 nm or more and 150 nm or less. Here, the separation functional layer refers to a layered region which is constituted by a matrix and a void and is surrounded by an interface other than a boundary between the matrix and the void, and is a region having a fluid separation function.

The separation functional layer in the fluid separation membrane of the present invention has a carbon element ratio of 40 atom% or more and 98 atom% or less. The separation functional layer preferably has a carbon element ratio of 55 atom% or more, more preferably 70 atom% or more because the chemical resistance is improved and stable separation performance can be exhibited in the long term as the carbon element ratio of the separation functional layer increases. On the other hand, the separation functional layer preferably has a carbon element ratio of 95 atom% or less, more preferably 92 atom% or less because the brittleness decreases and the resistance to breakage increases as the carbon element ratio of the separation functional layer decreases. The carbon element ratio of the separation functional layer in the present invention means the percentage of carbon atoms when the total number of atoms of all elements calculated by wide scan analysis using X-ray photoelectron spectroscopy is 100 atom%. In the X-ray photoelectron spectroscopic measurement, surface contamination of the separation functional layer in the fluid separation membrane is removed by argon gas cluster ion etching or the like, and then the measurement range is adjusted to be only the separation functional layer, and the observation surface is analyzed.

The constituent elements other than carbon in the separation functional layer are not particularly limited, and hydrogen, oxygen, nitrogen, boron, sulfur, silicon and the like may be contained, and an alkali metal, an alkaline earth metal and the like may be contained.

The separation functional layer in the fluid separation membrane of the present invention has a silicon element ratio of 0.1 atom% or more and 20 atom% or less. Since the brittleness tends to decrease as the silicon element ratio of the separation functional layer increases, the separation functional layer more preferably has a silicon element ratio of 0.4 atom% or more. On the other hand, the separation functional layer more preferably has a carbon element ratio of 10 atom% or less because the chemical resistance is excellent as the silicon element ratio of the separation functional layer decreases. The silicon element ratio in the present invention means the percentage of silicon atoms when the total number of atoms of all elements calculated by wide scan analysis using X-ray photoelectron spectroscopy is 100 atom%. In the X-ray photoelectron spectroscopic measurement, surface contamination of the separation functional layer in the fluid separation membrane is removed by argon gas cluster ion etching or the like, and then the measurement range is adjusted to be only the separation functional layer, and the observation surface is analyzed.

The material of the separation functional layer in the present invention is not particularly limited as long as it has the above-described carbon element ratio, and conventionally known materials can be appropriately selected, but from the viewpoint of easy control of the carbon element ratio, the separation functional layer is preferably a material obtained by carbonizing an organic material made of a carbonizable resin.

As the carbonizable resin, a thermoplastic resin or a thermosetting resin can be used. Examples of the thermoplastic resin include polyphenylene ether, polyvinyl alcohol, polyacrylonitrile, phenol resins, aromatic polyesters, polyamic acids, aromatic polyimides, aromatic polyamides, polysiloxane, polyvinylidene fluoride, cellulose acetate, polyetherimide, and copolymers of these resins. Examples of the thermosetting resin include unsaturated polyester resins, alkyd resins, melamine resins, urea resins, polyimide resins, diallyl phthalate resins, lignin resins, urethane resins, phenol resins, polyfurfuryl alcohol resins, and copolymers of these resins. These resins may be used alone, or a plurality of the resins may be used.

As the carbonizable resin, it is preferable to use polyphenylene ether, polyamic acid, aromatic polyimide, aromatic polyamide, polysiloxane, or polyetherimide from the viewpoint of the separation performance of the carbon membrane, and it is more preferable to use a copolymer thereof from the viewpoint of easily forming voids of the separation functional layer by phase separation structure formation.

A sacrificial resin that disappears during the manufacturing step may be used together with the carbonizable resin. Examples of the sacrificial resin include a polyolefin such as polyethylene, polypropylene, or polystyrene, an acrylic resin, a methacrylic resin, polyacetal, polyvinylpyrrolidone, aliphatic polyester, aromatic polyester, aliphatic polyamide, and polycarbonate. Two or more types of these resins may be used.

Generally, when a carbonizable resin used as a precursor of a separation functional layer is carbonized, it is difficult to form voids having an average pore diameter of 3 nm or more and 150 nm or less. When voids having a small pore diameter are present in the precursor resin layer of the separation functional layer, the voids are softened and become fluid when exceeding the glass transition point in a carbonization step, and are deformed in a direction of reducing the specific surface area, so that voids having a small pore diameter, that is, voids having a large specific surface area are preferentially eliminated. Therefore, it is difficult to retain voids having a pore diameter of 150 nm or less in the separation functional layer after carbonization. On the other hand, when large voids having an average pore diameter of more than 150 nm are present in the separation functional layer, since the number of voids is substantially reduced in the separation functional layer, the effect of stress dispersion cannot be sufficiently obtained, and the fluid separation membrane is easily broken by local stress concentration, so that it is difficult to exhibit the effect of the present invention.

In the present invention, a method for forming voids having an average pore diameter of 3 nm or more and 150 nm or less in the separation functional layer is not particularly limited, and examples thereof include a method in which a sacrificial resin is added to a precursor resin of the separation functional layer and the resin is removed by being burned in a carbonization step, and a method in which a copolymer containing a partially thermally decomposable molecular skeleton is subjected to phase separation and then carbonized.

The pore diameter of the separation functional layer can be appropriately selected according to the separation target object. Among the pores contained in the separation functional layer, those having a pore diameter of less than 3 nm are defined as micropores, and those having a pore diameter of 3 nm or more and 150 nm or less are defined as voids.

The matrix of the separation functional layer preferably has micropores having a pore diameter of less than 3 nm, and particularly preferably has pores of 0.3 nm or more and 2.0 nm or less. The peak micropore diameter of the portion other than the voids of the separation functional layer is desirably appropriately adjusted in accordance with the size of the separation target substance. For example, when carbon dioxide and methane are separated, the peak micropore diameter of the separation functional layer is preferably 0.3 nm or more and 0.7 nm or less. For the peak micropore diameter of the separation functional layer in the present invention, an adsorption isotherm is measured by adsorbing and desorbing carbon dioxide to and from a fluid separation membrane according to JIS Z 8831-3 (2010), and analysis is performed based on a Grand Canonical Monte Carlo (GCMC) method. Here, when the fluid separation membrane is a composite membrane having a porous support layer, the peak micropore diameter of the separation functional layer may be evaluated by peeling only a portion of the separation functional layer.

When it is difficult to calculate a clear peak diameter by the above method, the peak micropore diameter of the separation functional layer is substituted by a pore diameter $d_{NKP}$ calculated based on a normalized Knudsen-based permeance method (NKP method). The NKP method is a method of measuring the permeability of various types of non-condensable gases having different molecular diameters, plotting the dynamic molecular diameter of the gas on the horizontal axis and the permeability on the vertical axis, and calculating the pore diameter dNKP [nm] by curve fitting using (Formula 1). In the present specification, four types of gases including He, Ar, $N_2$, and $CH_4$ are used as the non-condensable gas (details are described in Lie Meng et al., Journal of Membrane Science, Vol. 496, p. 211-218, Department of Chemical Engineering, Graduate School of Engineering, Hiroshima University (2015)).

[Mathematical Formula 1]

$$\frac{P_i}{P_{He}} \sqrt{\frac{M_i}{M_{He}}} = \frac{\left(d_{NKP} - d_{k,i}\right)^3}{\left(d_{NKP} - d_{k,He}\right)^3} \qquad \text{(Formula 1)}$$

The average pore diameter of voids in the separation functional layer of the present invention is preferably 3 nm or more and 50 nm or less. When the pore diameter of the void is large, the pressure loss is reduced and the permeance of the fluid is improved, and therefore the average pore diameter of the voids is more preferably 5 nm or more, still more preferably 10 nm or more. On the other hand, when the pore diameter of the void is small, the voids can be highly dispersed in the separation functional layer, and the brittleness is easily improved. Therefore, the average pore diameter of the voids is more preferably 30 nm or less, still more preferably 20 nm or less.

Here, the separation functional layer in the cross section of the fluid separation membrane is observed using a technique capable of observing a cross section as a two-dimensional image, such as a scanning electron microscope or a transmission electron microscope, in three fields at a magnification at which 30 or more voids are included in the observation region after voids that are cut at the end of an observation region are excluded, the equivalent circle diameter of each void is calculated, and the median value in each field of view is defined as the pore diameter of the void. Here, the average pore diameter of voids is an arithmetic average of the obtained median values.

The average void fraction of the separation functional layer in the cross section of the fluid separation membrane of the present invention is preferably 5% or more and 60% or less. Here, the average void fraction of the separation functional layer is calculated by the following formula in which the separation functional layer in the cross section of the fluid separation membrane is observed using a technique capable of observing a cross section as a two-dimensional image, such as a scanning electron microscope or a transmission electron microscope, in three fields at a magnification at which 30 or more voids are included in the observation region, the area of the entire observed region is assumed as A, and the area of the void portion is assumed as B.

$$\text{Average void fraction (\%)} = B/A \times 100$$

The higher the average void fraction of the separation functional layer is, the lower the pressure loss and the more the flow velocity can be heightened when the separation functional layer is used as a channel for gases or liquids. Meanwhile, the lower the average void fraction of the separation functional layer, the higher the resistance to forces applied in cross-sectional directions, such as compression and bending, and hence the more the fluid separation membrane is advantageous in terms of handleability and use under high pressure. In consideration of these, the average void fraction of the separation functional layer is more preferably 8% or more and 30% or less.

The shape of the fluid separation membrane of the present invention is not particularly limited, and may be any shape such as a fibrous shape or a film shape. In the case of having the fibrous shape, there is an advantage that a membrane area per unit volume can be increased as compared with the film shape. In addition, since the fluid separation membrane having the fibrous shape has enhanced resistance to forces applied in cross-sectional directions, the fluid separation membrane can be operated also at high pressure, whereby it becomes possible to perform membrane separation with high efficiency. This configuration is hence preferred.

When the shape of the fluid separation membrane of the present invention is fibrous, the shape of the fiber cross section is not limited at all, and can be any shape such as a round cross section, a multi-leafed cross section such as a triangular cross section, a flat cross section, or a hollow cross section. In particular, when the cross section of the fluid separation membrane is a hollow cross section, that is, has a hollow fiber shape, pressure resistance can be imparted while the flow of the supplied fluid and the fluid after separation is controlled, which is preferable. The area ratio of the cross-sectional area X of the hollow portion to the cross-sectional area Y of the hollow fiber (hollow area ratio: $100 \times X/Y$) is preferably high because the higher the area ratio, the lower the pressure loss, which does not hinder the flow of the fluid, and the lower the area ratio, the higher the pressure resistance. From these viewpoints, the hollow area ratio is preferably 5% or more and 70% or less. Here, the cross-sectional area Y of the hollow fiber is a cross-sectional area including the cross-sectional area X of the hollow portion. In addition, a plurality of hollow portions may be provided, and in this case, the sum of the cross-sectional areas of the hollow portions is defined as the cross-sectional area X of the hollow portions. The film thickness of the separation functional layer in the fluid separation membrane of the present invention is not particularly limited, and can be appropriately set according to the application and the like.

In the case of a self-supporting membrane having no porous support layer, the film thickness of the separation functional layer is preferably 800 $\mu$m or less, more preferably 500 $\mu$m or less, from the viewpoint of increasing the permeability of the fluid. From the viewpoint of securing mechanical strength and suppressing defects, the film thickness of the separation functional layer is preferably 10 $\mu$m or more, more preferably 50 $\mu$m or more.

In the case of a composite membrane having a porous support layer, the film thickness of the separation functional layer is preferably 5 $\mu$m or less, more preferably 3 $\mu$m or less, from the viewpoint of increasing the permeability of the fluid. From the viewpoint of securing mechanical strength and suppressing defects, the film thickness of the separation functional layer is preferably 0.1 $\mu$m or more, more preferably 0.3 $\mu$m or more. Here, the film thickness of the separation functional layer is defined by measuring the thickness of the thinnest portion constituting the separation functional layer with a microscope or the like, and is calculated as an average value of the thicknesses of the separation functional layer obtained by analyzing 10 cross sections of the fluid separation membrane.

In a separation membrane module of the present invention, the fluid separation membrane of the present invention is housed in a case. In the separation membrane module, a flow path for controlling the flow of the fluid and guiding the fluid that has permeated the fluid separation membrane is formed. In addition, it is preferable to use a case or a sealing material for the purpose of controlling the flow of the fluid. The material of the case is not particularly limited, but is preferably appropriately selected according to the use environment such as pressure resistance and heat resistance, and examples thereof include metal, resin, carbon, and a composite thereof.

The mixed gas and the mixed liquid to be separated by the purification unit including the separation membrane module of the present invention are not particularly limited, and examples of the applications of the purification unit include a system for separating and storing carbon dioxide from exhaust gas of a power plant, a blast furnace, and the like, sulfur component removal from gasified fuel gas in coal gasification combined power generation, purification of biogas or natural gas, and purification of hydrogen from organic hydrides. That is, in the separation membrane module of the present invention, the fluid separation membrane is preferably a gas separation membrane.

The purification unit of the present invention is formed by disposing the separation membrane module of the present invention in at least a part of the process. The purification unit preferably includes a pretreatment unit, a product recovery unit, a by-product recovery unit, and the like in addition to the separation membrane module. The pretreatment unit is a unit for previously removing impurities from the separation target fluid before separation or adjusting the composition of the separation target fluid before separation. The product recovery unit is a unit for recovering a product from which unnecessary components have been removed from the separation target fluid before separation, and further purifying the product as necessary or supplying the product to a pipeline or the like. The by-product recovery unit is a unit that recovers a by-product from the separation target fluid before separation, and discharges the by-product after detoxification as an example. In the purification unit of the present invention, it is preferable that the separation membrane module and the pretreatment unit, the product recovery unit, and the by-product recovery unit are connected by piping or the like, and the separation target fluid before separation is continuously separated into the product and the by-product. In the purification unit, a plurality of separation membrane modules can be used in combination according to the treatment amount of the separation target fluid. The number of separation membrane modules in the purification unit is preferably 10 or more from the viewpoint of enabling efficient purification, and is preferably 1000 or less from the viewpoint of miniaturization of the purification unit and maintainability. The plurality of separation membrane modules may be connected in series or in parallel to the separation target fluid.

As a method for manufacturing a product using such a purification unit as at least a part thereof, another purification step or an additional step may be included before and after the purification step in the separation membrane module of the present invention, or a fluid may be produced by mixing it with a product purified in a different purification step. Examples of other purification steps and different purification steps include distillation, adsorption, absorption, and the like. Examples of the additional step include component adjustment for mixing it with another fluid.

Since the product obtained by the manufacturing method of the present invention is purified by the separation membrane module of the present invention having high separation performance, energy consumption in the above additional step is suppressed, and the product can be suitably used in various industrial applications as a low environmental load fluid.

<Method for Manufacturing Fluid Separation Membrane>

The method for manufacturing the fluid separation membrane of the present invention will be specifically described by taking a fluid separation membrane in a hollow fiber shape using a carbon material obtained by carbonizing a polymer compound as a separation functional layer as an example, but the present invention is not limited thereto. Examples of the method for manufacturing a composite membrane having a porous support layer include a method including a step (step 1) of forming a precursor resin layer of a separation functional layer on the porous support layer, and a step (step 3) of carbonizing the precursor resin layer by heating and firing.

Examples of the method for manufacturing a self-supporting membrane having no porous support layer include a method including a step (step 2) of molding a precursor resin of a fluid separation membrane and a step (step 3) of carbonizing the precursor resin by heating and firing. However, a method for manufacturing a fluid separation membrane in the present invention is not limited to the method which will be described below.

[Step 1]

Step 1 is a step of forming a precursor resin layer of the separation functional layer on the porous support layer when a composite hollow fiber membrane having a porous support layer is manufactured. The material of the porous support layer is not particularly limited, and conventionally known materials can be appropriately selected, and examples of the material include porous inorganic materials such as alumina, silica, cordierite, zirconia, titania, vycor glass, zeolite, magnesia, and sintered metals; porous organic materials containing at least one polymer selected from the group consisting of homopolymers and copolymers such as polysulfone, polyether sulfone, polyamide, polyester, cellulose-based polymer, vinyl polymer, polyphenylene sulfide, polyphenylene sulfide sulfone, polyphenylene sulfone, and polyphenylene oxide; and porous carbon materials obtained by carbonizing a porous organic material made of a carbonizable resin.

As the precursor resin of the separation functional layer, a thermoplastic resin or a thermosetting resin may be used. Examples of the thermoplastic resin include polyphenylene ether, polyvinyl alcohol, polyacrylonitrile, phenol resins, aromatic polyesters, polyamic acids, aromatic polyimides, polyimide siloxane, aromatic polyamides, polysiloxane, polyvinylidene fluoride, cellulose acetate, polyetherimide, and copolymers of these resins. Examples of the thermosetting resin include unsaturated polyester resins, alkyd resins, melamine resins, urea resins, polyimide resins, diallyl phthalate resins, lignin resins, urethane resins, phenol resins, polyfurfuryl alcohol resins, and copolymers of these resins. These resins may be used alone, or a plurality of the resins may be used.

The method for forming voids in the separation functional layer is not particularly limited, and examples thereof include a method of adding a sacrificial resin to the separation functional layer or a precursor resin layer thereof.

The sacrificial resin is a resin that can be removed at any stage such as after the precursor resin layer is laminated, during heating and firing, or after heating and firing. Methods for removing the sacrificial resin are not particularly limited, and it is preferred to use methods such as the following: a method in which the sacrificial resin is chemically removed, for example, by conducting depolymerization using a chemical; a method in which the sacrificial resin is dissolved away by adding a solvent capable of dissolving the sacrificial resin; and a method in which the resin mixture is heated to lower the molecular weight of the sacrificial resin by thermal decomposition, thereby removing the sacrificial resin. These techniques can be used alone or in combination thereof. In the case of using a combination, the techniques may be simultaneously performed or separately performed.

As the method in which the sacrificial resin is chemically removed, a method in which the sacrificial resin is hydrolyzed using an acid or an alkali is preferred from the standpoints of profitability and handleability. Examples of resins which are susceptible to hydrolysis by acids or alkalis include polyesters, polycarbonates, and polyamides.

Preferred examples of the method in which the sacrificial resin is removed by adding a solvent capable of dissolving the sacrificial resin include: a method in which the solvent is continuously supplied to the carbonizable resin and sacrificial resin which have been mixed, thereby dissolving and removing the sacrificial resin; and a method in which the solvent and the resins are mixed batchwise to dissolve and remove the sacrificial resin.

Specific examples of the sacrificial resin which are suitable for the method of removing by solvent addition include polyolefins such as polyethylene, polypropylene, and polystyrene, acrylic resins, methacrylic resins, polyvinylpyrrolidone, aliphatic polyesters, and polycarbonates. Of these, amorphous resins are preferred from the standpoint of solubility in the solvent, and examples thereof include polystyrene, methacrylic resins, and polycarbonates.

Examples of the method in which the sacrificial resin is lowered in molecular weight by thermal decomposition and removed thereby include: a method in which the carbonizable resin and sacrificial resin that have been mixed are heated batchwise to decompose the sacrificial resin; and a method in which the carbonizable resin and sacrificial resin that have been continuously mixed are continuously supplied to a heating source and heated to thereby decompose the sacrificial resin. Specific examples of such sacrificial resins include polyolefins such as polyethylene, polypropylene, and polystyrene, acrylic resins, methacrylic resins, polyacetals, polyvinylpyrrolidone, polysiloxanes, aliphatic polyesters, aromatic polyesters, aliphatic polyamides, and polycarbonates. These resins may be used either alone or in a mixed state.

The method for forming the precursor resin layer is not particularly limited, and examples thereof include a method for coating the surface of the porous support with the precursor resin. Examples of the method for coating the precursor resin include a dip-coating method, a spraying method, a casting method, and a vapor deposition method, and the dip-coating method is preferable because the manufacturing method is relatively easy. The dip-coating method is roughly divided into a melting method and a solution method. In the melting method, a precursor resin is melted and laminated at a temperature equal to or higher than the melting point, and then cooled to a temperature equal to or lower than the melting point to manufacture a fluid separation membrane. In the solution method, a precursor resin is dissolved in a solvent and laminated, and then dried appropriately to remove the solvent, thereby manufacturing a fluid separation membrane. In any method, an additive may be added for enhancing the function such as improving the performance of the fluid separation membrane.

[Step 2]

Step 2 is a step of molding a precursor resin of the fluid separation membrane in the case of manufacturing a self-supporting hollow fiber membrane having no porous support layer.

The method for molding the precursor resin is not particularly limited, but when the fluid separation membrane is fibrous, the spinning method which will be described later can be appropriately selected. When the precursor resin is a thermoplastic resin, melt spinning can be conducted after the resins have been heated to a temperature equal to or higher than their softening temperatures. When the precursor resin is soluble in the solvent, solution spinning such as dry spinning, dry wet spinning, or wet spinning can be appropriately selected.

Melt spinning is a method in which a precursor resin that has been heated and melted (in a flowing state) using a kneading extruder or the like is extruded from a spinneret and wound while being cooled to be formed into a fiber, is faster in process speed than solution spinning, and is excellent in productivity. Melt spinning is also preferable because low-cost manufacturing is feasible since the cost associated with process safety measures can be reduced as no volatilization of solvents occurs in the process.

Solution spinning is a method in which a spinning dope, which contains a precursor resin prepared in advance and a solvent, is weighed and then extruded from a spinneret to be formed into a fiber. This method can precisely control the phase separation state. In particular, dry wet spinning and wet spinning both using a coagulation bath are more preferable embodiments because the thermally induced phase separation, the non-solvent-induced phase separation, which will be discussed below, and the like can be appropriately combined to precisely control the condition of the separated phases of the precursor resin.

As the precursor resin of the fluid separation membrane, a thermoplastic resin or a thermosetting resin may be used. Examples of the thermoplastic resin include polyphenylene ether, polyvinyl alcohol, polyacrylonitrile, phenol resins, aromatic polyesters, polyamic acids, aromatic polyimides, polyimide siloxane, aromatic polyamides, polysiloxane, polyvinylidene fluoride, cellulose acetate, polyetherimide, and copolymers of these resins. Examples of the thermosetting resin include unsaturated polyester resins, alkyd resins, melamine resins, urea resins, polyimide resins, diallyl phthalate resins, lignin resins, urethane resins, phenol resins, polyfurfuryl alcohol resins, and copolymers of these resins. These resins may be used alone, or a plurality of the resins may be used.

The method for forming voids in the separation functional layer of the fluid separation membrane is not particularly limited, and examples thereof include a method in which a sacrificial resin is added to a precursor resin or a spinning dope made of a precursor resin and a solvent.

The sacrificial resin is a resin that can be removed at any stage such as during spinning, after spinning, during heating and firing, or after heating and firing of the precursor resin. Methods for removing the sacrificial resin are not particularly limited, and it is preferred to use methods such as the following: a method in which the sacrificial resin is chemically removed, for example, by conducting depolymerization using a chemical; a method in which the sacrificial resin is dissolved away by adding a solvent capable of dissolving the sacrificial resin; and a method in which the resin mixture is heated to lower the molecular weight of the sacrificial resin by thermal decomposition, thereby removing the sacrificial resin. These techniques can be used alone or in combination thereof. In the case of using a combination, the techniques may be simultaneously performed or separately performed.

As the method in which the sacrificial resin is chemically removed, a method in which the sacrificial resin is hydrolyzed using an acid or an alkali is preferred from the standpoints of profitability and handleability. Examples of resins which are susceptible to hydrolysis by acids or alkalis include polyesters, polycarbonates, and polyamides.

Preferred examples of the method in which the sacrificial resin is removed by adding a solvent capable of dissolving the sacrificial resin include: a method in which the solvent is continuously supplied to the carbonizable resin and sacrificial resin which have been mixed, thereby dissolving and removing the sacrificial resin; and a method in which the solvent and the resins are mixed batchwise to dissolve and remove the sacrificial resin.

Specific examples of the sacrificial resin which are suitable for the method of removing by solvent addition include polyolefins such as polyethylene, polypropylene, and polystyrene, acrylic resins, methacrylic resins, polyvinylpyrrolidone, aliphatic polyesters, and polycarbonates. Of these, amorphous resins are preferred from the standpoint of solubility in the solvent, and examples thereof include polystyrene, methacrylic resins, and polycarbonates.

Examples of the method in which the sacrificial resin is lowered in molecular weight by thermal decomposition and removed thereby include: a method in which the carbonizable resin and sacrificial resin that have been mixed are heated batchwise to decompose the sacrificial resin; and a method in which the carbonizable resin and sacrificial resin that have been continuously mixed are continuously supplied to a heating source and heated to thereby decompose the sacrificial resin. Specific examples of such sacrificial resins include polyolefins such as polyethylene, polypropylene, and polystyrene, acrylic resins, methacrylic resins, polyacetals, polyvinylpyrrolidone, polysiloxanes, aliphatic polyesters, aromatic polyesters, aliphatic polyamides, and polycarbonates. These resins may be used either alone or in a mixed state.

[Step 3]

The step 3 is a step of subjecting the molded body obtained by laminating the precursor resin layer on the porous support layer manufactured in the step 1 or the molded body of the precursor resin of the fluid separation membrane manufactured in the step 2 to an infusibilization treatment as necessary, and carbonizing the precursor resin by heating and firing to manufacture a fluid separation membrane.

In this step, it is preferable to heat the precursor resin in an inert gas atmosphere. Herein, examples of the inert gas include helium, nitrogen, and argon. The flow rate of the inert gas is required to be a flow rate at which the oxygen concentration in the heating device can be sufficiently lowered, and it is preferable to appropriately select an optimal flow rate value according to the size of the heating device, the supply amount of the raw material, the carbonization temperature, and the like. The upper limit of the flow rate of the inert gas is not limited, but it is preferable to appropriately set the flow rate according to the temperature distribution and the design of the heating device, from the viewpoint of economy and reducing the temperature change in the heating device.

Moreover, it is possible to chemically etch the surface of the separation functional layer to control the micropore diameter size in the surface of the separation functional layer by heating the precursor resin in a mixed gas atmosphere of the above-mentioned inert gas and an active gas. Examples of the active gas include oxygen, carbon dioxide, water vapor, air, and combustion gas. The concentration of the active gas in the inert gas is preferably 0.1 ppm or more and 100 ppm or less.

The firing temperature in this step can be arbitrarily set within a range in which the permeance and the separation factor of the separation membrane are improved, but the firing temperature is preferably 500°C or higher and preferably 850°C or lower.

The precursor resin may be subjected to an infusibilization treatment as necessary before being subjected to the carbonization treatment. Methods for the treatment for imparting infusibilization are not particularly limited, and known methods can be used. Specific examples of the methods include: a method in which the precursor is heated in the presence of oxygen to thereby cause oxidative crosslinking; a method in which the precursor is irradiated with high-energy rays such as electron beams or gamma rays to form a crosslinked structure; and a method in which a substance having a reactive group is immersed or mixed to form a crosslinked structure. Of these, the method in which the precursor is heated in the presence of oxygen to thereby cause oxidative crosslinking is preferred because the process is simple and the production cost can be reduced. These techniques can be used alone or in combination thereof, and the techniques may be used either simultaneously or separately.

EXAMPLES

(Average Void Fraction of Separation Functional Layer and Average Pore Diameter of Voids)

Using a field emission electron microscope JEM-F200 manufactured by JEOL Ltd., a cross section of the separation functional layer of the fluid separation membrane sectioned by a focused ion beam (FIB) method was observed by scanning transmission electron microscopy (STEM) at an acceleration voltage of 200 kV. A STEM image was acquired at the central portion of the separation functional layer in a film thickness depth direction. Subsequently, the acquired STEM image was binarized through image processing using image analysis software "Multi Image Tool" (manufactured by System Infrontier Co., Ltd.) to extract voids.

After voids that are cut at the end of an observation region were excluded, observation in three fields of view was performed at a magnification at which 30 or more voids were included in the observation region, the equivalent circle diameter of each void was calculated, and the median value in each field of view was defined as the pore diameter of the void. The average pore diameter of voids was an arithmetic average of the obtained median values.

The average void fraction of the separation functional layer was calculated by the following formula in which the separation functional layer in the cross section of the fluid separation membrane was observed in three fields at a magnification at which 30 or more voids were included in the observation region, the area of the entire observed region was assumed as A, and the area of the void portion was assumed as B.

$$\text{Average void fraction } (\%) = B/A \times 100$$

(Element Ratio)

Wide scan analysis was performed using Al $K\alpha_{1,2}$ rays (1486.6 eV) as a source X-ray in a scanning type dual X-ray photoelectron spectrometer PHI Quantes manufactured by ULVAC-PHI. When the total of the calculated number of atoms of all elements was defined as 100 atom%, the ratio of carbon atoms was defined as the carbon element ratio, and the ratio of silicon atoms was defined as the silicon element ratio. The surface contamination was removed by argon gas cluster ion etching, and then the observation surface was analyzed.

(Measurement of Gas Permeance)

A module was prepared using the fluid separation membranes obtained in Examples and Comparative Examples, and the gas permeance Q was measured. Carbon dioxide and methane were used as the measurement gases, and in accordance with the pressure sensor method of JIS K7126-1 (2006), the pressure changes per unit time on the permeation side for carbon dioxide and methane were measured by an external pressure method under the condition of a measurement temperature of 25°C. Herein, the pressure difference between the supply side and the permeation side was set to 0.11 MPa.
Subsequently, the gas permeance Q was calculated by the following equation. In addition, the ratio of the gas permeance Q of each component was defined as the separation factor $\alpha$. Herein, the membrane area was calculated from the outer diameter and the length of a region contributing to gas permeation.

Gas permeance Q = [permeation gas amount (nmol)]/[membrane area ($m^2$) $\times$ time (s) $\times$ pressure difference (Pa)]

When the gas permeance Q of carbon dioxide was 30 nmol/($m^2 \cdot Pa \cdot s$) or more, it was determined as "S". When the gas permeance Q was 20 nmol/($m^2 \cdot Pa \cdot s$) or more and less than 30 nmol/($m^2 \cdot Pa \cdot s$), it was determined as "A". When the gas permeance Q was 10 nmol/($m^2 \cdot Pa \cdot s$) or more and less than 20 nmol/($m^2 \cdot Pa \cdot s$), it was determined as "B". When the gas permeance Q was 5 nmol/($m^2 \cdot Pa \cdot s$) or more and less than 10 nmol/($m^2 \cdot Pa \cdot s$), it was determined as "C". When the gas permeance Q was less than 5 nmol/($m^2 \cdot Pa \cdot s$), it was determined as "D".

(Separation Factor between Carbon Dioxide and Methane)

The gas permeance Q of each of carbon dioxide and methane was measured, and (permeance of carbon dioxide)/(permeance of methane) was calculated as a separation factor between carbon dioxide and methane. When the separation factor between carbon dioxide and methane was 40 or more, it was determined as "S". When the separation factor was 25 or more and less than 40, it was determined as "A". When the separation factor was 15 or more and less than 25, it was determined as "B". When the separation factor was less than 15, it was determined as

"C".

(Brittleness Measurement)

An indenter having a tip diameter $\varphi$ of 10 $\mu$m was used to perform an indentation test in a direction perpendicular to the surface of the separation functional layer. When a load was applied, the fracture state of the pressed portion was observed with a scanning electron microscope. When no crack was checked even at a pressure of 4 GPa, it was determined as "S". When a crack was checked at a pressure of 3 GPa or more and less than 4 GPa, it was determined as "A". When a crack was checked at a pressure of 2 GPa or more and less than 3 GPa, it was determined as "B". When a crack was checked at a pressure of 1 GPa or more and less than 2 GPa, it was determined as "C". When a crack was checked at a pressure of less than 2 GPa, it was determined as "D".

(Production Example 1)

10 parts by weight of polyacrylonitrile (PAN) (MW: 150,000) manufactured by Polysciences, Inc., 10 parts by weight of polyvinyl pyrrolidone (PVP) (MW: 40,000) manufactured by Sigma-Aldrich Co. LLC, and 80 parts by weight of dimethyl sulfoxide (DMSO) manufactured by FUJIFILM Wako Pure Chemical Corporation were mixed, and the mixture was stirred at 100°C to prepare a spinning raw material solution.
The obtained spinning raw material solution was cooled to 25°C, a 80 wt% aqueous solution of DMSO was discharged from the inner tube, the spinning raw material solution was discharged from a middle tube, and a 90 wt% aqueous solution of DMSO was discharged from the outer tube at the same time using a concentric triple spinneret, and then, the solutions were guided to a coagulation bath containing pure water at 25°C and wound around a roller, thereby obtaining an original yarn. The obtained original yarn was washed with water and then dried at 25°C for 24 hours using a circulation dryer to prepare a precursor of a porous carbon fiber in a hollow fiber shape.

The obtained precursor of the porous carbon fiber was passed through an electric furnace at 250°C, and the precursor was heated in an air atmosphere for 1 hour, and the heated precursor was subjected to an infusibilization treatment, thereby obtaining an infusibilized yarn. Subsequently, the infusibilized yarn was carbonized at a carbonization temperature of 650°C to obtain a porous carbon fiber of Production Example 1 having an outer diameter of 300 $\mu$m and an inner diameter of 100 $\mu$m. In addition, when the cross section of the porous carbon fiber was observed, a continuous porous structure was checked on the inner surface.

(Example 1)

Using the porous carbon fiber obtained in Production Example 1 as a porous support layer, a precursor resin solution containing an aromatic polyimide copolymer and a thermally decomposable sacrificial resin was applied to the porous support layer by a dip-coating method and desolventized, and then dried at 120°C for 3 hours by a circulation dryer, thereby obtaining a precursor of a fluid separation membrane having a precursor resin layer coated on the outer surface of the porous support layer. Subsequently, the precursor of the fluid separation membrane was fired at 650°C in a nitrogen atmosphere to prepare a fluid separation membrane.

As a result of evaluation by the above-described method, the peak micropore diameter of the separation functional layer was 0.52 nm, the average pore diameter of voids of the separation functional layer was 15 nm, the average void fraction of the separation functional layer was 18%, the carbon element ratio of the separation functional layer was 86 atom%, the silicon element ratio of the separation functional layer was 1.2 atom%, the film thickness of the separation functional layer was 0.8 $\mu$m, and the carbon element ratio of the porous support layer was 80 atom%.

The gas permeance Q of carbon dioxide of the obtained fluid separation membrane was "S", the separation factor $\alpha$ between carbon dioxide and methane was "S", and the brittleness measurement was "S". The evaluation results are shown in Table 1.

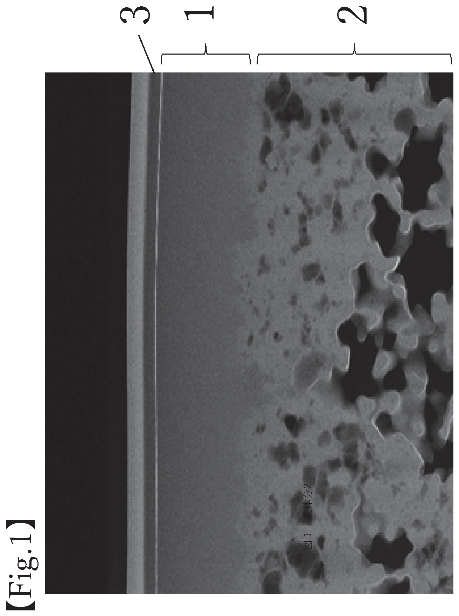

Fig. 1 shows a scanning transmission electron micrograph of a cross section of the obtained fluid separation membrane. The deposition protective film is provided at the time of scanning transmission electron microscopy observation, and does not constitute the fluid separation membrane of the present invention.

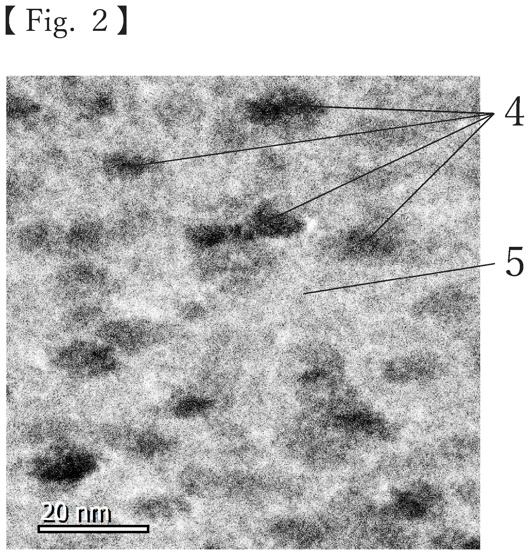

Fig. 2 shows a scanning transmission electron micrograph of the separation functional layer in the obtained fluid separation membrane.

(Example 2)

A fluid separation membrane was prepared in the same manner as in Example 1 except that a siloxane polymer was added to the precursor resin solution of Example 1.

In the obtained fluid separation membrane, the peak micropore diameter of the separation functional layer was 0.54 nm, the average pore diameter of voids of the separation functional layer was 19 nm, the average void fraction of the separation functional layer was 23%, the carbon element ratio of the separation functional layer was 72 atom%, the silicon element ratio of the separation functional layer was 4.6 atom%, the film thickness of the separation functional layer was 1.1 $\mu$m, and the carbon element ratio of the porous support layer was 82 atom%.

The gas permeance Q of carbon dioxide of the obtained fluid separation membrane was "S", the separation factor $\alpha$ between carbon dioxide and methane was "S", and the brittleness measurement was "S". The evaluation results are shown in Table 1.

(Example 3)

A fluid separation membrane was prepared in the same manner as in Example 1 except that the molecular weight of the thermally decomposable sacrificial resin contained in the precursor resin solution was reduced.

In the obtained fluid separation membrane, the peak micropore diameter of the separation functional layer was 0.51 nm, the average pore diameter of voids of the separation functional layer was 5 nm, the average void fraction of the separation functional layer was 12%, the carbon element ratio of the separation functional layer was 90 atom%, the silicon element ratio of the separation functional layer was 0.5 atom%, the film thickness of the separation functional layer was 0.9 $\mu$m, and the carbon element ratio of the porous support layer was 85 atom%.

The gas permeance Q of carbon dioxide of the obtained fluid separation membrane was "A", the separation factor $\alpha$ between carbon dioxide and methane was "S", and the brittleness measurement was "S". The evaluation results are shown in Table 1.

(Example 4)

A fluid separation membrane was prepared in the same manner as in Example 1 except that the amount of the thermally decomposable sacrificial resin contained in the precursor resin solution was increased.

In the obtained fluid separation membrane, the peak micropore diameter of the separation functional layer was 0.54 nm, the average pore diameter of voids of the separation functional layer was 23 nm, the average void fraction of the separation functional layer was 35%, the carbon element ratio of the separation functional layer was 78 atom%, the silicon element ratio of the separation functional layer was 0.9 atom%, the film thickness of the separation functional layer was 1.3 $\mu$m, and the carbon element ratio of the porous support layer was 82 atom%.

The gas permeance Q of carbon dioxide of the obtained fluid separation membrane was "S", the separation factor $\alpha$ between carbon dioxide and methane was "S", and the brittleness measurement was "A". The evaluation results are shown in Table 1.

(Example 5)

A fluid separation membrane was prepared in the same manner as in Example 1 except that the molecular weight of the thermally decomposable sacrificial resin contained in the precursor resin solution was increased and the amount of the thermally decomposable sacrificial resin contained in the precursor resin solution was reduced.

In the obtained fluid separation membrane, the peak micropore diameter of the separation functional layer was 0.51 nm, the average pore diameter of voids of the separation functional layer was 52 nm, the average void fraction of the separation functional layer was 6%, the carbon element ratio of the separation functional layer was 87 atom%, the silicon element ratio of the separation functional layer was 0.5 atom%, the film thickness of the separation functional layer was 1.1 $\mu$m, and the carbon element ratio of the porous support layer was 83 atom%.

The gas permeance Q of carbon dioxide of the obtained fluid separation membrane was "A", the separation factor $\alpha$ between carbon dioxide and methane was "S", and the brittleness measurement was "B". The evaluation results are shown in Table 1.

(Example 6)

A fluid separation membrane was prepared in the same manner as in Example 1 except that a porous alumina tube having an outer diameter of 8 mm was used as the porous support layer.

In the obtained fluid separation membrane, the peak micropore diameter of the separation functional layer was 0.52 nm, the average pore diameter of voids of the separation functional layer was 20 nm, the average void fraction of the separation functional layer was 16%, the carbon element ratio of the separation functional layer was 83 atom%, the silicon element ratio of the separation functional layer was 0.6 atom%, and the film thickness of the separation functional layer was 1.0 $\mu$m.

The gas permeance Q of carbon dioxide of the obtained fluid separation membrane was "S", the separation factor $\alpha$ between carbon dioxide and methane was "S", and the brittleness measurement was "A". The evaluation results are shown in Table 1.

(Example 7)

A fluid separation membrane was prepared in the same manner as in Example 1 except that the amount of the thermally decomposable sacrificial resin contained in the precursor resin solution was increased.

In the obtained fluid separation membrane, the peak micropore diameter of the separation functional layer was 0.57 nm, the average pore diameter of voids of the separation functional layer was 17 nm, the average void fraction of the separation functional layer was 63%, the carbon element ratio of the separation functional layer was 81 atom%, the silicon element ratio of the separation functional layer was 0.2 atom%, the film thickness of the separation functional layer was 1.2 $\mu$m, and the carbon element ratio of the porous support layer was 79 atom%.

The gas permeance Q of carbon dioxide of the obtained fluid separation membrane was "S", the separation factor $\alpha$ between carbon dioxide and methane was "B", and the brittleness measurement was "B". The evaluation results are shown in Table 1.

(Example 8)

A fluid separation membrane was prepared in the same manner as in Example 1 except that the firing temperature of the precursor of the fluid separation membrane was increased.

In the obtained fluid separation membrane, the peak micropore diameter of the separation functional layer was 0.50 nm, the average pore diameter of voids of the separation functional layer was 19 nm, the average void fraction of the separation functional layer was 25%, the carbon element ratio of the separation functional layer was 94 atom%, the silicon element ratio of the separation functional layer was 0.2 atom%, the film thickness of the separation functional layer was 1.1 µm, and the carbon element ratio of the porous support layer was 90 atom%.

The gas permeance Q of carbon dioxide of the obtained fluid separation membrane was "A", the separation factor α between carbon dioxide and methane was "S", and the brittleness measurement was "B". The evaluation results are shown in Table 1.

(Example 9)

A fluid separation membrane was prepared in the same manner as in Example 1 except that the firing temperature of the precursor of the fluid separation membrane was increased.

In the obtained fluid separation membrane, the peak micropore diameter of the separation functional layer was 0.49 nm, the average pore diameter of voids of the separation functional layer was 14 nm, the average void fraction of the separation functional layer was 19%, the carbon element ratio of the separation functional layer was 97 atom%, the silicon element ratio of the separation functional layer was 0.0 atom%, the film thickness of the separation functional layer was 1.0 µm, and the carbon element ratio of the porous support layer was 94 atom%.

The gas permeance Q of carbon dioxide of the obtained fluid separation membrane was "B", the separation factor α between carbon dioxide and methane was "S", and the brittleness measurement was "C". The evaluation results are shown in Table 1.

(Example 10)

A fluid separation membrane was prepared in the same manner as in Example 1 except that the firing temperature of the precursor of the fluid separation membrane was decreased.

In the obtained fluid separation membrane, the peak micropore diameter of the separation functional layer was 0.54 nm, the average pore diameter of voids of the separation functional layer was 15 nm, the average void fraction of the separation functional layer was 14%, the carbon element ratio of the separation functional layer was 60 atom%, the silicon element ratio of the separation functional layer was 0.5 atom%, the film thickness of the separation functional layer was 1.2 µm, and the carbon element ratio of the porous support layer was 77 atom%.

The gas permeance Q of carbon dioxide of the obtained fluid separation membrane was "A", the separation factor α between carbon dioxide and methane was "A", and the brittleness measurement was "A". The evaluation results are shown in Table 1.

(Example 11)

A fluid separation membrane was prepared in the same manner as in Example 1 except that the firing temperature of the precursor of the fluid separation membrane was decreased and the amount of the thermally decomposable sacrificial resin contained in the precursor resin solution was reduced.

In the obtained fluid separation membrane, the peak micropore diameter of the separation functional layer was 0.55 nm, the average pore diameter of voids of the separation functional layer was 12 nm, the average void fraction of the separation functional layer was 7%, the carbon element ratio of the separation functional layer was 47 atom%, the silicon element ratio of the separation functional layer was 2.6 atom%, the film thickness of the separation functional layer was 1.5 µm, and the carbon element ratio of the porous support layer was 73 atom%.

The gas permeance Q of carbon dioxide of the obtained fluid separation membrane was "B", the separation factor α between carbon dioxide and methane was "A", and the brittleness measurement was "B". The evaluation results are shown in Table 1.

(Example 12)

A fluid separation membrane was prepared in the same manner as in Example 1 except that a siloxane polymer was added to the coating solution of Example 1 and the firing temperature of the precursor of the fluid separation membrane was decreased.

In the obtained fluid separation membrane, the peak micropore diameter of the separation functional layer was 0.52 nm, the average pore diameter of voids of the separation functional layer was 27 nm, the average void fraction of the separation functional layer was 21%, the carbon element ratio of the separation functional layer was 67 atom%, the silicon element ratio of the separation functional layer was 8.2 atom%, the film thickness of the separation functional layer was 1.2 µm, and the carbon element ratio of the porous support layer was 80 atom%.

The gas permeance Q of carbon dioxide of the obtained fluid separation membrane was "A", the separation factor α between carbon dioxide and methane was "A", and the brittleness measurement was "S". The evaluation results are shown in Table 1.

(Example 13)

A fluid separation membrane was prepared in the same manner as in Example 1 except that the coating film thickness of the precursor resin in Step 1 was increased.

In the obtained fluid separation membrane, the peak micropore diameter of the separation functional layer was 0.53 nm, the average pore diameter of voids of the separation functional layer was 18 nm, the average void fraction of the separation functional layer was 20%, the carbon element ratio of the separation functional layer was 83 atom%, the silicon element ratio of the separation functional layer was 1.4 atom%, the film thickness of the separation functional layer was 4.1 μm, and the carbon element ratio of the porous support layer was 79 atom%.

The gas permeance Q of carbon dioxide of the obtained fluid separation membrane was "B", the separation factor α between carbon dioxide and methane was "S", and the brittleness measurement was "S". The evaluation results are shown in Table 1.

(Example 14)

A fluid separation membrane was prepared in the same manner as in Example 1 except that the coating film thickness of the precursor resin in Step 1 was increased.

In the obtained fluid separation membrane, the peak micropore diameter of the separation functional layer was 0.53 nm, the average pore diameter of voids of the separation functional layer was 22 nm, the average void fraction of the separation functional layer was 21%, the carbon element ratio of the separation functional layer was 80 atom%, the silicon element ratio of the separation functional layer was 2.0 atom%, the film thickness of the separation functional layer was 8.5 μm, and the carbon element ratio of the porous support layer was 77 atom%.

The gas permeance Q of carbon dioxide of the obtained fluid separation membrane was "C", the separation factor α between carbon dioxide and methane was "S", and the brittleness measurement was "A". The evaluation results are shown in Table 1.

(Example 15)

Using, as a spinning stock solution, one obtained by reducing the solvent of the precursor resin solution of Example 1 to increase the solid content concentration, a 80 wt% aqueous solution of NMP, the spinning stock solution, and a 90 wt% aqueous solution of NMP were simultaneously discharged from an inner tube, a middle tube, and an outer tube using a concentric triple spinneret. The solutions were led to a coagulation bath containing pure water of 25°C, and wound up on a roller to produce an original yarn. The obtained original yarn was washed with water and then dried at 25°C for 24 hours using a circulation dryer to prepare a precursor of a fluid separation membrane in a hollow fiber shape.

Subsequently, the precursor of the fluid separation membrane was passed through an electric furnace at 250°C, heated in an air atmosphere for 1 hour to perform an infusibilization treatment, and further fired at 650°C in a nitrogen atmosphere to prepare a fluid separation membrane.

In the obtained fluid separation membrane, the peak micropore diameter of the separation functional layer was 0.54 nm, the average pore diameter of voids of the separation functional layer was 16 nm, the average void fraction of the separation functional layer was 20%, the carbon element ratio of the separation functional layer was 84 atom%, the silicon element ratio of the separation functional layer was 0.6 atom%, and the film thickness of the separation functional layer was 52 μm.

The gas permeance Q of carbon dioxide of the obtained fluid separation membrane was "D", the separation factor α between carbon dioxide and methane was "S", and the brittleness measurement was "A". The evaluation results are shown in Table 1.

(Comparative Example 1)

A fluid separation membrane was prepared in the same manner as in Example 1 except that the thermally decomposable sacrificial resin was not added to the precursor resin solution and a part of the skeleton of the aromatic polyimide copolymer was changed.

Voids having a pore diameter of 3 nm or more and 150 nm or less were not observed in the separation functional layer of the obtained fluid separation membrane. The peak micropore diameter of the separation functional layer was 0.52 nm, the carbon element ratio of the separation functional layer was 85 atom%, the silicon element ratio of the separation functional layer was 0.3 atom%, the film thickness of the separation functional layer was 1.2 $\mu$m, and the carbon element ratio of the porous support layer was 82 atom%.

The gas permeance Q of carbon dioxide of the obtained fluid separation membrane was "D", the separation factor $\alpha$ between carbon dioxide and methane was "A", and the brittleness measurement was "D". The evaluation results are shown in Table 1.

[Table 1]

| | | Example 1 | Example 2 | Example 3 | Example 4 | Example 5 | Example 6 | Example 7 | Example 8 |
|---|---|---|---|---|---|---|---|---|---|
| Separation functional layer | Precursor material | Aromatic polyimide copolymer | Aromatic polyimide copolymer + siloxane polymer | Aromatic polyimide copolymer | Aromatic polyimide copolymer | Aromatic polyimide copolymer | Aromatic polyimide copolymer | Aromatic polyimide copolymer | Aromatic polyimide copolymer |
| | Peak pore diameter (nm) | 0.52 | 0.54 | 0.51 | 0.54 | 0.51 | 0.52 | 0.57 | 0.50 |
| | Average pore diameter of voids (nm) | 15 | 19 | 5 | 23 | 52 | 20 | 17 | 19 |
| | Average void fraction (%) | 18 | 23 | 12 | 35 | 6 | 16 | 63 | 25 |
| | Carbon element ratio (atom%) | 86 | 72 | 90 | 78 | 87 | 83 | 81 | 94 |
| | Silicon element ratio (atom%) | 1.2 | 4.6 | 0.5 | 0.9 | 0.5 | 0.6 | 0.2 | 0.2 |
| | Film thickness of separation functional layer (μm) | 0.8 | 1.1 | 0.9 | 1.3 | 1.1 | 1.0 | 1.2 | 1.1 |
| Porous support layer | Material | Porous carbon | Porous carbon | Porous carbon | Porous carbon | Porous carbon | Porous alumina | Porous carbon | Porous carbon |
| | Carbon element ratio (atom%) | 80 | 82 | 85 | 82 | 83 | - | 79 | 90 |
| Effect | Gas permeance of carbon dioxide | S | S | A | S | A | S | S | A |
| | Separation | S | S | S | S | S | S | B | S |
| | Brittleness measurement | S | S | S | A | B | A | B | B |

17

| | | Example 9 | Example 10 | Example 11 | Example 12 | Example 13 | Example 14 | Example 15 | Comparative Example 1 |
|---|---|---|---|---|---|---|---|---|---|
| Separation functional layer | Precursor material | Aromatic polyimide co-polymer | Aromatic polyimide co-polymer | Aromatic polyimide co-polymer | Aromatic polyimide co-polymer + siloxane polymer | Aromatic polyimide co-polymer | Aromatic polyimide co-polymer | Aromatic polyimide co-polymer | Aromatic polyimide co-polymer |
| | Peak pore diameter (nm) | 0.49 | 0.54 | 0.55 | 0.52 | 0.53 | 0.53 | 0.54 | 0.52 |
| | Average pore diameter of voids (nm) | 14 | 15 | 12 | 27 | 18 | 22 | 16 | - |
| | Average void fraction (%) | 19 | 14 | 7 | 21 | 20 | 21 | 20 | - |
| | Carbon element ratio (atom%) | 97 | 60 | 47 | 67 | 83 | 80 | 84 | 85 |
| | Silicon element ratio (atom%) | 0.0 | 0.5 | 2.6 | 8.2 | 1.4 | 2.0 | 0.6 | 0.3 |
| | Film thickness of separation functional layer ($\mu$m) | 1.0 | 1.2 | 1.5 | 1.2 | 4.1 | 8.5 | 52 | 1.2 |
| Porous support layer | Material | Porous carbon | Porous carbon | Porous carbon | Porous carbon | Porous carbon | Porous carbon | - | Porous carbon |
| | Carbon element ratio (atom%) | 94 | 77 | 73 | 80 | 79 | 77 | - | 82 |
| Effect | Gas permeance of carbon dioxide | B | A | B | A | B | C | D | D |
| | Separation | S | A | A | A | S | S | S | A |
| | Brittleness measurement | C | A | B | S | S | A | A | D |

EP 4 786 038 A1

INDUSTRIAL APPLICABILITY

The fluid separation membrane of the present invention can be suitably used for a system for separating and storing carbon dioxide from exhaust gas of a power plant, a blast furnace, and the like, sulfur component removal from gasified fuel gas in coal gasification combined power generation, purification of biogas or natural gas, purification of hydrogen from organic hydrides, and the like.

DESCRIPTION OF REFERENCE SIGNS

1: Separation functional layer
2: Porous support layer
3: Deposition protective film
4: Void
5: Matrix

## Claims

1. A fluid separation membrane comprising a separation functional layer,
   wherein the separation functional layer has a carbon element ratio of 40 atom% or more and 98 atom% or less, and the separation functional layer has voids therein having an average pore diameter of 3 nm or more and 150 nm or less.

2. The fluid separation membrane according to claim 1, wherein the separation functional layer has an average void fraction of 5% or more and 60% or less.

3. The fluid separation membrane according to claim 1, wherein the voids have an average pore diameter of 3 nm or more and 50 nm or less.

4. The fluid separation membrane according to claim 1, wherein the separation functional layer has a peak micropore diameter of 0.3 nm or more and 2.0 nm or less.

5. The fluid separation membrane according to claim 1, wherein the separation functional layer has an average void fraction of 8% or more and 30% or less.

6. The fluid separation membrane according to claim 1, wherein the separation functional layer has a carbon element ratio of 55 atom% or more and 95 atom% or less.

7. The fluid separation membrane according to claim 1, wherein the separation functional layer has a silicon element ratio of 0.1 atom% or more and 20 atom% or less.

8. The fluid separation membrane according to claim 1, wherein the separation functional layer is formed on at least a part of a porous support layer.

9. The fluid separation membrane according to claim 8, wherein the separation functional layer has a film thickness of 0.1 $\mu$m or more and 5 $\mu$m or less.

10. The fluid separation membrane according to claim 8, wherein the porous support layer has a carbon element ratio of 60 atom% or more and 98 atom% or less.

11. The fluid separation membrane according to claim 8, wherein the porous support layer has a bicontinuous porous structure.

12. The fluid separation membrane according to claim 1, wherein the fluid separation membrane has a hollow fiber shape.

13. The fluid separation membrane according to claim 1, wherein the fluid separation membrane is a gas separation membrane.

**14.** A separation membrane module comprising the fluid separation membrane according to claim 1 in a case.

**15.** A purification unit comprising the separation membrane module according to claim 14.

**16.** A biogas or natural gas purification unit comprising the separation membrane module according to claim 14.

**17.** A purification unit comprising the separation membrane module according to claim 14 combined in the number of 10 or more and 1000 or less.

**18.** A purified fluid separated using the separation membrane module according to claim 14.

【Fig.1】

EP 4 786 038 A1

[ Fig. 2 ]

## INTERNATIONAL SEARCH REPORT

| International application No. |
| --- |
| **PCT/JP2024/032524** |

### A. CLASSIFICATION OF SUBJECT MATTER

***B01D 71/02***(2006.01)i; ***B01D 69/00***(2006.01)i; ***B01D 69/08***(2006.01)i; ***B01D 69/10***(2006.01)i; ***B01D 69/12***(2006.01)i; ***C01B 32/05***(2017.01)i
FI:    B01D71/02; B01D69/00; B01D69/08; B01D69/10; B01D69/12; B01D71/02 500; C01B32/05

According to International Patent Classification (IPC) or to both national classification and IPC

### B. FIELDS SEARCHED

Minimum documentation searched (classification system followed by classification symbols)

B01D71/02; B01D69/00; B01D69/08; B01D69/10; B01D69/12; C01B32/05

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| X | WO 2019/021964 A1 (TORAY INDUSTRIES, INC.) 31 January 2019 (2019-01-31) claims, paragraphs [0016], [0047]-[0048], [0069]-[0106], [0136]-[0151] | 1-18 |
| Y | | 1-18 |
| X | WO 2016/013676 A1 (TORAY INDUSTRIES, INC.) 28 January 2016 (2016-01-28) claims, paragraphs [0011], [0027]-[0029], [0045]-[0129] | 1-7, 12-18 |
| Y | | 1-7, 12-18 |
| Y | JP 60-179102 A (TORAY INDUSTRIES, INC.) 13 September 1985 (1985-09-13) claims, page 2, upper right column, lines 2-12, examples, fig. 1 | 1-18 |
| Y | SHIOYA, M. et al., Structure of carbon films derived from polycarbodiimide, Carbon, 1996, vol. 34, no. 10, pp. 1229-1238 "4.2 Microvoids", fig. 6-9 | 1-18 |

☐ Further documents are listed in the continuation of Box C.　　☑ See patent family annex.

| | |
| --- | --- |
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **27 November 2024** | **10 December 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/032524**

| Patent document cited in search report | | | Publication date (day/month/year) | Patent family member(s) | | | Publication date (day/month/year) |
|---|---|---|---|---|---|---|---|
| WO | 2019/021964 | A1 | 31 January 2019 | US | 2020/0171441 | A1 | |
| | | | | claims, paragraphs [0020], [0057]-[0058], [0093]-[0136], [0187]-[0202] | | | |
| | | | | EP | 3659697 | A1 | |
| | | | | AU | 2018306010 | A1 | |
| | | | | CA | 3064528 | A1 | |
| | | | | CN | 110891673 | A | |
| | | | | KR | 10-2020-0033844 | A | |
| | | | | TW | 201908003 | A | |
| WO | 2016/013676 | A1 | 28 January 2016 | US | 2017/0216779 | A1 | |
| | | | | claims, paragraphs [0019], [0038]-[0041], [0058]-[0159] | | | |
| | | | | EP | 3178542 | A1 | |
| | | | | CA | 2955913 | A1 | |
| | | | | AU | 2015293084 | A1 | |
| | | | | CN | 106536028 | A | |
| | | | | KR | 10-2017-0036682 | A | |
| | | | | MX | 2017001075 | A | |
| JP | 60-179102 | A | 13 September 1985 | (Family: none) | | | |

Form PCT/ISA/210 (patent family annex) (July 2022)

REFERENCES CITED IN THE DESCRIPTION

**Patent documents cited in the description**

- JP 8299769 A

- JP 2016013676 W

**Non-patent literature cited in the description**

- **M. RUNGTA et al.** *Carbon*, 2017, vol. 115, 237-248

- **LIE MENG et al.** Journal of Membrane Science. Department of Chemical Engineering, Graduate School of Engineering, Hiroshima University, 2015, vol. 496, 211-218